# EUROPÄISCHE PATENTANMELDUNG

(11) **EP 1 201 492 A1**
(43) Veröffentlichungstag der Anmeldung: **02.05.2002**
(21) Anmeldenummer: 01120421.1
(22) Anmeldetag: 27.08.2001
(51) Int. Cl.: B60N 2/58, B60N 2/60

(54) **Schonbezug für Autositze**

(30) Priorität: 25.08.2000 DE 20014757 U
(71) Anmelder: Diana KFZ-Textil GmbH, 92660 Neustadt (DE)
(72) Erfinder: Unger, Angelika, 92637 Weiden (DE)

(57) **Zusammenfassung**

Aus der Praxis sind Schonbezüge für Autositze, die auf den Polstern der Rück- und Vordersitze von insbesondere Pkws anbringbar sind, bestehend aus einem Rückenlehnenteil und einem Sitzteil, die auf den entsprechenden Teilen der Sitzpolsterung zu liegen kommen bzw. diese umspannen und ggf. mit Sollbruchstellen für den Austritt von in der Sitzpolsterung untergebrachten Seitenairbags ausgestattet sind, bekannt.
Es hat sich nun seit langem gezeigt, daß auch die besten Autositzpolsterungen oftmals keine adäquate Möglichkeit bieten, notwendigen Sitzpositionen der Fahrzeuginsassen Rechnung zu tragen. Dies ist insbesondere dann der Fall, wenn die Fahrzeuginsassen Rückenprobleme haben oder beispielsweise Beinvenenprobleme. Im ersteren Fall werden dann zusätzlich Kissen oder Rückenstützen in Form der bekannten Lordosestützen verwendet, im letzteren Fall Sitzkissen unterschiedlicher Länge und Höhe. Diese Hilfsmittel sind nicht nur deshalb in den meisten Fällen nur bedingt geeignet, weil sie sich beim Aus- oder Einsteigen bzw. während der Fahrt des Autos verschieben können, sondern sie lassen auch eine individuelle Anpassung an wechselnde Fahrgäste bzw. Autolenker und deren Beifahrer nicht zu und sind auch für eine witterungsbedingte Anpassung des Sitzkomforts nicht geeignet.
Zur Lösung dieses Problems wird vorgeschlagen, daß sich innerhalb des Schonbezugs und/oder mit diesem verbunden im Bereich von dessen Rückenlehnenteil und/oder dessen Sitzteil wenigstens ein Kissen (4,5) befindet, das zur Veränderung der Rückenlehnenpolsterung bzw. der Sitzpolsterung des Autositzes bezüglich Federung und Sitzkomfort ausfblasbar ist, wobei der Schonbezug in an sich bekannter Weise aus einem Rückenlehnenschonbezug (3) und einem Sitzschonbezug (2) bestehen kann.

## Beschreibung

Die Erfindung betrifft Schonbezüge für Autositze gemäß dem Oberbegriff des Anspruchs 1.

Derartige Autositzbezüge sind beispielsweise aus den Gebrauchsmustern 296 20 130, 297 13 126 und 297 04 593 bekannt.

Solche Schonbezüge leisten neuerdings, insbesondere bei Verwendung von Seitenairbags in der Autositzpolsterung, einen Beitrag zur Sicherheitserhöhung der Fahrzeuginsassen bei Seitenaufprall des Fahrzeugs auf Hindernisse. Insofern haben sie seit geraumer Zeit nicht nur eine den Polsterüberzug schonende Funktion, sondern auch eine technische Funktion.

Es hat sich nun seit langem gezeigt, daß auch die besten Autositzpolsterungen oftmals keine adäquate Möglichkeit bieten, notwendigen Sitzpositionen der Fahrzeuginsassen Rechnung zu tragen. Dies ist insbesondere dann der Fall, wenn die Fahrzeuginsassen Rückenprobleme haben oder beispielsweise Beinvenenprobleme. Im ersteren Fall werden dann zusätzlich Kissen oder Rückenstützen in Form der bekannten Lordosestützen verwendet, im letzteren Fall Sitzkissen unterschiedlicher Länge und Höhe. Diese Hilfsmittel sind nicht nur deshalb in den meisten Fällen nur bedingt geeignet, weil sie sich beim Aus- oder Einsteigen bzw. während der Fahrt des Autos verschieben können, sondern sie lassen auch eine individuelle Anpassung an wechselnde Fahrgäste bzw. Autolenker und deren Beifahrer nicht zu und sind auch für eine witterungsbedingte Anpassung des Sitzkomforts nicht geeignet.

Die Aufgabe der Erfindung besteht deshalb darin, Schonbezüge zu entwickeln, die eine Veränderung bzw. Anpassung sowohl der Rückenlehnenpolster als auch der Sitzpolsterung von Autositzen an personelle Wünsche ermöglichen, um den Sitzkomfort sowie medizinische und therapeutische Einwirkungen auf den Körper des Fahrgastes zu optimieren.

Diese Aufgabe wird erfindungsgemäß dadurch gelöst, daß sich innerhalb des Schonbezugs und/oder mit diesem verbunden im Bereich von dessen Rückenlehnenteil und/oder dessen Sitzteil wenigstens ein kissenartiges Gebilde oder Kissen befindet, das zur Veränderung der Rückenlehnenpolsterung bzw. der Sitzpolsterung des Autositzes bezüglich Federung und Sitzkomfort aufblasbar ist.

Gemäß einer vorteilhaften Ausgestaltung der Erfindung lassen sich durch Aufblasen des oder der Kissen bzw. des oder der kissenartigen Gebilde die Rückenlehnengröße und/oder Sitzgröße bezüglich Höhe und/oder Breite und Länge anpassen.

Des weiteren können die Kissen bzw. kissenartige Gebilde mit Vibrationseinrichtungen versehen sein, die zur Erzielung von therapeutischen und/oder massageartigen Effekten mittels elektrisch betätigter Vibratoren die Rückenpartien und/oder Wirbelsäulenpartien der Fahrgäste in Schwingungszustände versetzen.

In diesem Zusammenhang hat sich ferner bewährt, derartige Schonbezüge mit einer Heizvorrichtung, beispielsweise in Form eines Heizkissens, zu versehen, um insbesondere in der kalten Jahreszeit für Fahrzeuge mit Sitzpolstern ohne Heizung ein äquivalentes Mittel zu schaffen.

Weitere vorteilhafte Ausgestaltungen der Erfindung sind den Unteransprüchen zu entnehmen.

Die Erfindung wird nachfolgend an Hand der in den Zeichnungsfiguren dargestellten Ausführungsbeispiele näher erläutert. In der Zeichnung zeigen:
- Fig. 1: eine perspektivische Seitenansicht eines mit einem erfindungsgemäßen Schonbezug versehenen Autositzes,
- Fig. 2: eine perspektivische Vorderansicht eines erfindungsgemäßen Rückenlehnensitzbezuges, der über das Rückenlehnenpolster eines Autositzes stülpbar ist, und
- Fig. 3: eine perspektivische Vorderansicht eines Rückenlehnensitzbezuges ähnlich derjenigen von Fig. 2, mit zusätzlicher Stoffbahn auf der Schonbezugoberfläche.

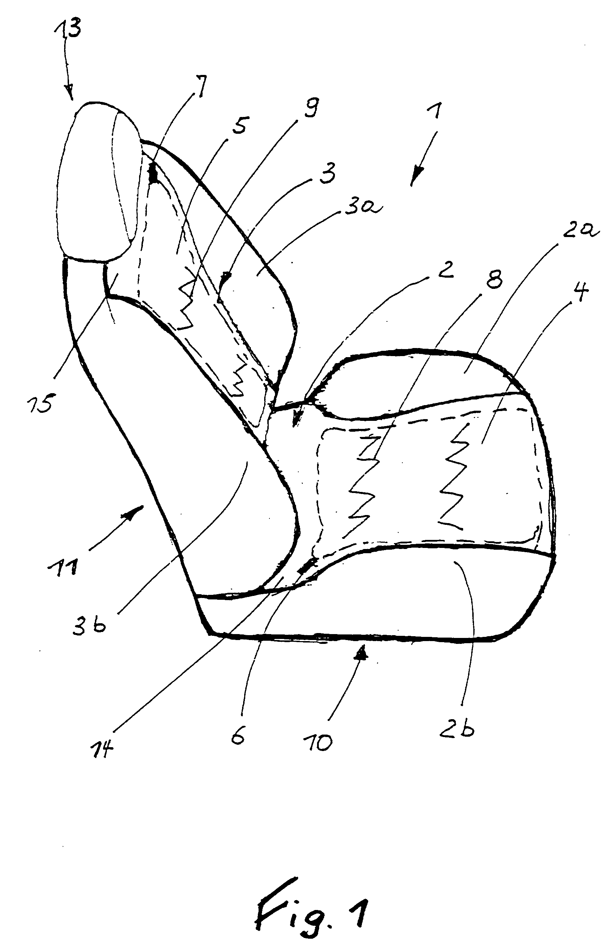

Der in Fig. 1 gezeigte Autovordersitz 1 ist mit einem erfindungsgemäßen Schonbezug überzogen bzw. bedeckt, dessen Bezugsstoff die Rückenlehne 11 des gepolsterten Sitzes in Form des Sitzlehnenschonzugs 3 und den Sitzteil 10 in Form des Sitzschonzugs 2 überspannt, so daß die Seitenbacken 3a und 3b des Sitzlehnenteils sowie die Seitenbacken 2a und 2b des Sitzteils das in der Zeichnung nicht dargestellte Sitzpolster des Sitzes vollständig bedecken.

Der Autositz 1 ist oberhalb der Sitzlehne ferner mit einer integrierten oder separaten Kopfstütze 13 ausgestattet, die ggf. ebenfalls von dem Sitzlehnenschonbezug überspannt werden kann.

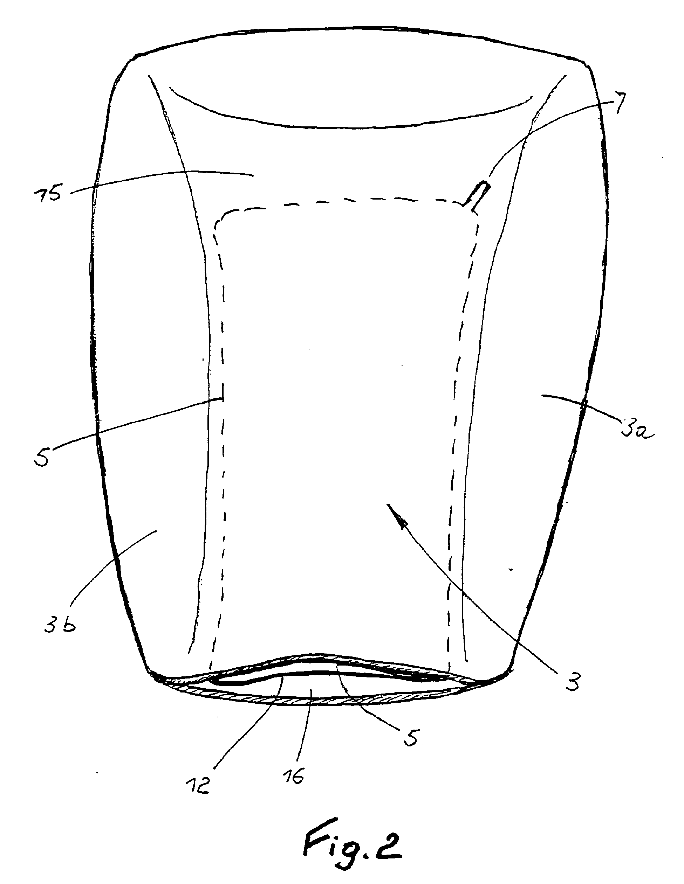

Innerhalb des Schonbezugs oder mit diesem verbunden, befindet sich im Bereich des Rükkenlehnenschonbezugs 3 und des Sitzschonbezugs 2 wenigstens ein Kissen 5 bzw. 4 bzw. ein kissenartiges Gebilde, dessen Umriß in den Zeichnungsfiguren durch gestrichelte Linien angedeutet ist. Dieses oder diese Kissen sind also Bestandteil des Schonbezugs und können, wie bei der in Fig. 2 gezeigten Ausführungsform des Rückenlehnenschonbezugs 3 beispielshalber dargestellt, zur Veränderung der Beschaffenheit des Rückenlehnenpolsters bzw. der Polsterung des Fahrzeugsitzes bezüglich Federung und Komfort aufgeblasen werden. Hierzu ist eine ventilartige Einrichtung 7 an einer geeigneten Stelle des Kissens 5 vorgesehen, durch die Luft entweder mit einer elektrischen oder einer handbetätigten Pumpe in den geschlossenen Kissenraum eingeblasen wird und durch die auch eine Entspannung der eingeblasenen Luft, falls gewünscht, zur Erzielung einer eines verlangten Polsterungseffektes stattfinden kann. Ein ähnliches Kissen 4 befindet sich im Sitzschonbezugsteil 2 des Schonbezugs, wie oben ausgeführt, und läßt sich über eine der Ventileinrichtung 7 ähnliches Ventil 6 aufblasen oder entspannen.

Durch Aufblasen der Kissen 4, 5 läßt sich somit der Polsterungskomfort einstellen und die Federung bzw. die Stützfunktion des gesamten Autositzes verändern, wobei insbesondere im Sitzschonbezug 2 auch eine Vergrößerung der Sitzlänge oder -breite und Sitzhöhe durch entsprechendes Aufblasen erreicht werden kann, wodurch sich neben dem Federungskomfort auch die Beinschenkelauflage des Fahrgastes zu seinem Vorteil verändern läßt.

Darüber hinaus läßt sich, wie ggf. in Fig. 1 schematisch mit den Bezugszeichen 8 und 9 angedeutet, der Sitzschonbezug 2 und auch der Sitzlehnenschonbezug 3 bzw. deren eingebaute Kissen 4, 5 oder kissenähnliche Gebilde mit einer Vibrationseinrichtung versehen, die zur Erzielung von therapeutischen und/oder massageähnlichen Effekten mittels elektrisch betätigbarer Vibratoren die Rückenpartie und/oder Wirbelsäulenpartie der auf dem Sitz sitzenden Person in Schwingungszustand versetzt, wobei die Vibrationsstärke einstellbar ist.

In diesem Zusammenhang hat sich auch bewährt, wie in Fig. 2 schematisch angedeutet, die Schonbezüge zur Bildung der luftgefüllten Kissen 4, 5 und/oder zur Aufnahme der Vibrationseinrichtung 8, 9 mehrlagig, insbesondere doppellagig auszubilden und darüber hinaus mit einer elektrisch betriebenen Heizvorrichtung zum Erwärmen der Rückenpartien und/oder Sitzoberfläche des Bezugs zu versehen, wofür das oder die Kissen 4, 5 beispielsweise mit einer nicht dargestellten elektrisch betriebenen Heizvorrichtung in Form eines Heizkissens ausgestattet sein können.

Die erwähnte doppellagige Ausbildung der Schonbezüge ist anhand des in Fig. 2 gezeigten Rückenlehnenschonbezugs 3 dargestellt. Dieser Schonbezug wird mit seiner sackähnlichen Öffnung 16 über die Rückenlehne des Sitzes gestülpt, und unter seiner Stoffoberseite befindet sich das über das Ventil 7 mit Luft füllbare Kissen 5, dessen Wandung 12 in den Hohlraum 16 hineinragt.

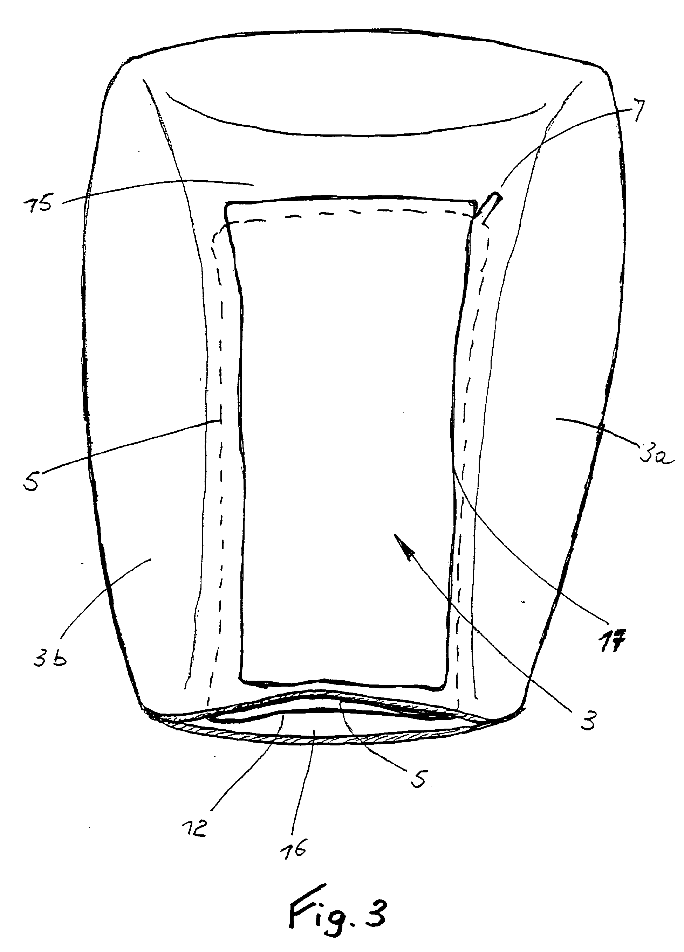

Bei der in Fig. 3 gezeigten Ausbildung des Schonbezugs ist letzterer wenigstens im Bereich seiner Sitzoberfläche 14 und/oder Rückenlehnenoberfläche 15 mit einem textilen Material 17 in Form einer Stoffbahn versehen, die in Anpassung an die jahreszeitlich bedingten Witterungsverhältnisse den menschlichen Körper entweder erwärmt oder kühlt und deshalb auf der Oberfläche des Schonbezugs auswechselbar befestigt ist, und zwar beispielsweise mit Hilfe von nicht dargestellten Klettverschlüssen.

Auf diese Weise läßt sich ein vorhandener Schonbezug zumindest in den Bereichen, die mit dem Körper der auf ihm sitzenden Person in Berührung kommen, an gewünschte Stoffqualitäten anpassen, die wiederum gewünschte Eigenschaften aufweisen, und zwar insbesondere bezüglich Gewebedichte und Gewebeart, wodurch sich beispielsweise wärmende Felle oder Decken, wie sie heutzutage oftmals in der kalten Jahreszeit Verwendung finden, erübrigen können.

## Patentansprüche

1. Schonbezüge für Autositze, die auf den Polstern der Rück- und Vordersitze von insbesondere Pkws anbringbar sind, bestehend aus einem Rückenlehnenteil und einem Sitzteil, die auf den entsprechenden Teilen der Sitzpolsterung zu liegen kommen bzw. diese umspannen und ggf. mit Sollbruchstellen für den Austritt von in der Sitzpolsterung untergebrachten Seitenairbags ausgestattet sind, **dadurch gekennzeichnet, daß** sich innerhalb des Schonbezugs und/oder mit diesem verbunden im Bereich von dessen Rückenlehnenteil und/oder dessen Sitzteil wenigstens ein Kissen (4, 5) befindet, das zur Veränderung der Rückenlehnenpolsterung bzw. der Sitzpolsterung des Autositzes bezüglich Federung und Sitzkomfort aufblasbar ist, wobei der Schonbezug in an sich bekannter Weise aus einem Rückenlehnenschonbezug (3) und einem Sitzschonbezug (2) bestehen kann.

2. Schonbezüge nach Anspruch 1, **dadurch gekennzeichnet, daß** durch Aufblasen des oder der Kissen (4, 5) die Rücklehnengröße und/oder Sitzgröße bezüglich Höhe und/oder Breite bzw. Länge veränderbar und anpaßbar ist.

3. Schonbezüge nach Anspruch 1 oder 2, **dadurch gekennzeichnet, daß** das oder die Kissen (4, 5) mit wenigstens einem Ventil (6, 7) zum Aufblasen bzw. zum Einstellen des Luftdrucks versehen sind.

4. Schonbezüge nach einem der Ansprüche 1 bis 3, **dadurch gekennzeichnet, daß** das Aufblasen mittels Pumpe elektrisch oder von Hand bewerkstelligbar ist.

5. Schonbezüge nach einem der Ansprüche 1 bis 4, **dadurch gekennzeichnet, daß** das oder die Kissen (4, 5) mit einer Vibrationseinrichtung (8, 9) versehen ist/sind, die zur Erzielung von therapeutischen und/oder massageähnlichen Effekten mittels elektrisch betätigbarer Vibratoren die Rückenpartie und/oder Wirbelsäulenpartie der auf dem Sitz sitzenden Person in Schwingungszustand versetzt.

6. Schonbezüge nach Anspruch 5, **dadurch gekennzeichnet, daß** die Vibrationsstärke einstellbar ist.

7. Schonbezüge nach einem der Ansprüche 1 bis 6, **dadurch gekennzeichnet, daß** die Schonbezüge zur Bildung des oder der luftgefüllten Kissen (4, 5) und/oder zur Aufnahme der Vibrationseinrichtung (8, 9) mehrlagig, insbesondere doppellagig, ausgebildet sind.

8. Schonbezüge nach einem der Ansprüche 1 bis 7, **dadurch gekennzeichnet, daß** sie mit einer elektrisch betriebenen Heizvorrichtung zum Erwärmen der Rückenpartien und/oder Sitzoberfläche des Bezugs versehen sind.

9. Schonbezüge nach einem der Ansprüche 1 bis 7, **dadurch gekennzeichnet, daß** das oder die Kissen (4, 5) mit einer elektrisch betriebenen Heizvorrichtung versehen sind.

10. Vorrichtung nach Anspruch 9, **dadurch gekennzeichnet, daß** das oder die Kissen (4, 5) als Heizkissen ausgebildet sind.

11. Schonbezüge für Autositze, die auf den Polstern der Rück- und Vordersitze von insbesondere Pkws anbringbar sind, bestehend aus einem Rückenlehnenteil und einem Sitzteil, die auf den entsprechenden Teilen der Sitzpolsterung zu liegen kommen bzw. diese umspannen und ggf. mit Sollbruchstellen für den Austritt von in der Sitzpolsterung untergebrachten Seitenairbags ausgestattet sind, **dadurch gekennzeichnet, daß** der Schonbezug wenigstens im Bereich seiner Sitzoberfläche (14) und/oder Rückenlehnenoberfläche (15) ein textiles Material aufweist, das in Anpassung an die jahreszeitlich bedingten Witterungsverhältnisse den menschlichen Körper entweder erwärmt oder kühlt.

12. Schonbezüge nach Anspruch 11, **dadurch gekennzeichnet, daß** das textile Material in Form einer Stoffbahn (17) auf der Oberfläche des Schonbezugs auswechselbar befestigt ist.

13. Schonbezüge nach Anspruch 12, **dadurch gekennzeichnet, daß** zur Befestigung der Stoffbahn (17) Klettverschlüsse verwendet werden.
